# EUROPEAN PATENT APPLICATION

(11) **EP 2 557 328 A2**
(43) Date of publication of application: **13.02.2013**
(21) Application number: 12177413.7
(22) Date of filing: 23.07.2012
(51) Int. Cl.: F16D 21/06, F16D 23/14

(54) **Clutch release bearing device**

(30) Priority: 09.08.2011 JP 2011173691
(71) Applicant: JTEKT CORPORATION, Osaka-shi Osaka 542-8502 (JP)
(72) Inventor: Suzuki, Akiyuki, Osaka-shi,, Osaka 542-8502 (JP)
(74) Representative: Winter, Brandl, Fürniss, Hübner, Röss, Kaiser, Polte - Partnerschaft

(57) **Abstract**

A clutch release bearing device includes: a first movable sleeve (10) that is slidably fitted to an outer periphery of a retainer (9); a first clutch release bearing (30) that is fitted to the first movable sleeve (10); a guide cylinder (40) that is fixedly arranged on an outer periphery of the first movable sleeve (10); a second movable sleeve (50) that is slidably fitted to an outer periphery of the guide cylinder (40); and a second clutch release bearing (70) that is fitted to the second movable sleeve (50). An extended cylindrical portion (42) that accommodates the first clutch release bearing (30) is formed at an end portion of the guide cylinder (40). A first sliding portion (45) and a second sliding portion (46) that slidingly guide the second movable sleeve (50) in an axial direction relative to the first movable sleeve (10) are formed on the outer periphery of the guide cylinder (40) including the extended cylindrical portion (42).

## Description

### BACKGROUND OF THE INVENTION

### 1. Field of the Invention

The invention relates to a clutch release bearing device that is employed in a dual clutch transmission (hereinafter, simply referred to as "DCT").

### 2. Description of Related Art

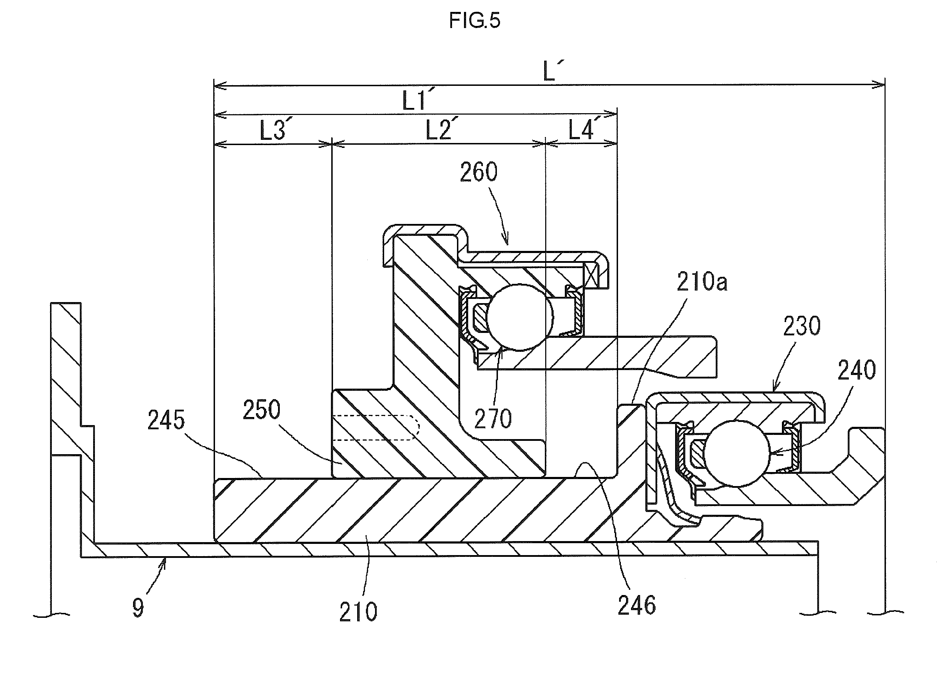

A conventional clutch release bearing device employed in a dry DCT is described in, for example, Japanese Patent Application Publication No. 2010-156402 (JP 2010-156402 A). As shown in FIG. 5, the conventional clutch release bearing device employed in a dry DCT includes a first movable sleeve 210, a first clutch release bearing 240, a second movable sleeve 250, and a second clutch release bearing 270. The first movable sleeve 210 is arranged on the outer periphery of a retainer 9 so as to be slidable in the axial direction. The first clutch release bearing 240 is fitted to a first cover member 230. The first cover member 230 is arranged in front of a flange 210a (on the right side of the flange 210a in FIG. 5) formed at one end side of the first movable sleeve 210. The first clutch release bearing 240 actuates a first diaphragm spring (not shown). The second movable sleeve 250 is fitted to the outer periphery of the first movable sleeve 210 so as to be slidable in the axial direction. The second clutch release bearing 270 is directly fitted to the front side of the second movable sleeve 250. The second movable sleeve 250 is fitted to a second cover member 260. The second clutch release bearing 270 actuates a second diaphragm spring (not shown). A first sliding portion 245 and a second sliding portion 246 are formed on the outer periphery of the first movable sleeve 210 at portions located behind the flange 210a (on the left side of the flange 210a in FIG. 5). When the first movable sleeve 210 is slid to an actuating position in the axial direction with the second movable sleeve 250 arranged at a standby position, the first sliding portion 245 slidingly guides the second movable sleeve 250 relative to the first movable sleeve 210 in the axial direction. When the second movable sleeve 250 is slid to an actuating position in the axial direction with the first movable sleeve 210 arranged at a standby position, the second sliding portion 246 slidingly guides the second movable sleeve 250 in the axial direction.

In the clutch release bearing device described in JP 2010-156402 A, the first clutch release bearing 240 is arranged in front of the flange 210a of the first movable sleeve 210 via the first cover member 230, and the first sliding portion 245 and the second sliding portion 246 for the second movable sleeve 250 are formed behind the flange 210a. Therefore, a length L1' of a portion of the first movable sleeve 210 behind the flange 210a is equal to or slightly longer than the sum of an axial length L2' of the second movable sleeve 250, an axial length L3' of the first sliding portion 245 and an axial length L4' of the second sliding portion 246. Thus, an axial length L' of the clutch release bearing device becomes long.

### SUMMARY OF THE INVENTION

It is an object of the invention to provide a clutch release bearing device with a shorter axial length.

An aspect of the invention relates to a clutch release bearing device that includes: a first movable sleeve that is slidably fitted to an outer periphery of a retainer, and that is slid by a first release fork in an axial direction; a first clutch release bearing that is fitted to the first movable sleeve, and that actuates a first diaphragm spring; a guide cylinder that is fixedly arranged on an outer periphery of the first movable sleeve so as to be movable together with the first movable sleeve; a second movable sleeve that is slidably fitted to an outer periphery of the guide cylinder, and that is slid by a second release fork in the axial direction; and a second clutch release bearing that is fitted to the second movable sleeve, and that actuates a second diaphragm spring. An extended cylindrical portion that accommodates the first clutch release bearing is formed at an end portion of the guide cylinder, which faces the first diaphragm spring. A first sliding portion and a second sliding portion are formed on the outer periphery of the guide cylinder including the extended cylindrical portion. When the first movable sleeve is slid in the axial direction to an actuating position with the second movable sleeve arranged at a standby position, the first sliding portion slidingly guides the second movable sleeve in the axial direction relative to the first movable sleeve. When the second movable sleeve is slid in the axial direction to an actuating position with the first movable sleeve arranged at a standby position, the second sliding portion slidingly guides the second movable sleeve in the axial direction.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a longitudinal sectional view that shows a clutch release bearing device according to a first embodiment of the invention;
FIG. 2 is a longitudinal sectional view of the clutch release bearing device shown in FIG. 1, showing a state where a first movable sleeve is slid to an actuating position in the axial direction with a second movable sleeve arranged at a standby position;
FIG. 3 is a longitudinal sectional view of the clutch release bearing device shown in FIG. 1, showing a state where the second movable sleeve is slid to an actuating position in the axial direction with the first movable sleeve arranged at a standby position;
FIG. 4 is a longitudinal sectional view that shows a clutch release bearing device according to a second embodiment of the invention; and
FIG. 5 is a longitudinal sectional view that shows a conventional clutch release bearing device.

### DETAILED DESCRIPTION OF EMBODIMENTS

Embodiments of the invention will be described with reference to the accompanying drawings.

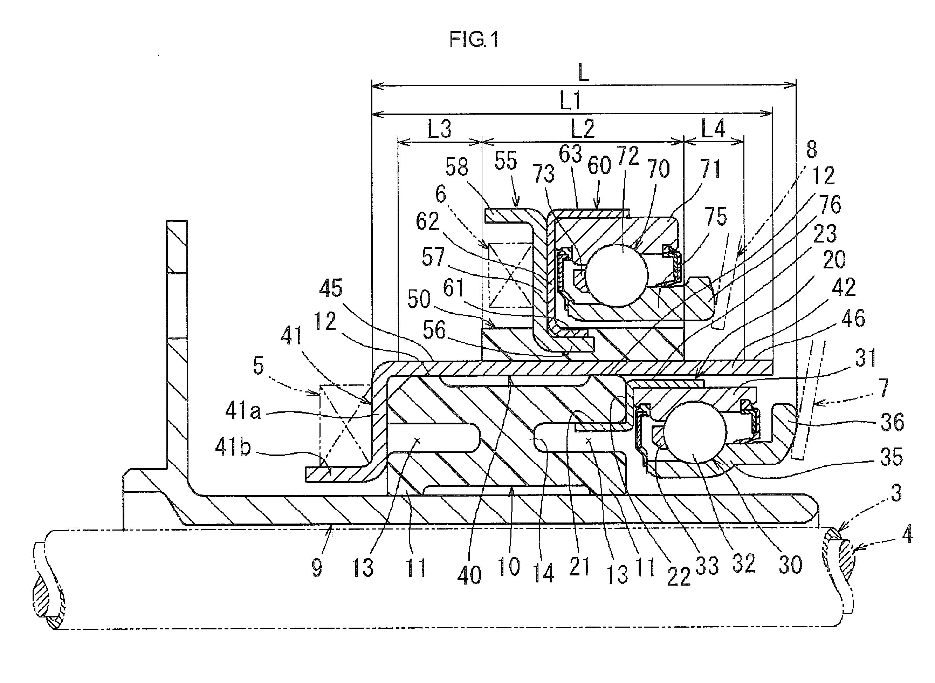

A clutch release bearing device according to a first embodiment of the invention will be described with reference to FIG. 1 to FIG. 3. As shown in FIG. 1, a clutch release bearing device employed in a dry DCT includes a first movable sleeve 10, a first clutch release bearing 30, a guide cylinder 40, a second movable sleeve 50 and a second clutch release bearing 70. The first movable sleeve 10 is arranged between a first release fork 5 and a first diaphragm spring 7. The second movable sleeve 50 is arranged between a second release fork 6 and a second diaphragm spring 8.

The first movable sleeve 10 is formed into a cylindrical shape having a bore diameter slightly larger than the outside diameter of a retainer 9, by subjecting a synthetic resin material to injection molding. The first movable sleeve 10 is fitted to the outer periphery of the retainer 9 so as to be slidable in the axial direction. In addition, in the first movable sleeve 10, spaces 13 are formed at a radially middle portion with a coupling portion 14 left at the center in the axial direction. Formation of the spaces 13 reduces the weight of the first movable sleeve 10, and prevents deformation due to shrinkage after the injection molding. In addition, in the first embodiment, annular radially-inner side contact portions 11 are formed near respective axial end portions of the inner periphery of the first movable sleeve 10. The radially-inner side contact portions 11 slidably contact the outer periphery of the retainer 9. A portion of the inner periphery of the first movable sleeve 10 other than the radially-inner side contact portions 11 is larger in diameter than each of the radially-inner side contact portions 11, and is held so as not to be in contact with the outer periphery of the retainer 9. In addition, annular radially-outer side contact portions 12 are formed near respective axial end portions of the outer periphery of the first movable sleeve 10. The radially-outer side contact portions 12 are press-fitted to and in contact with the inner periphery of the guide cylinder 40 (described in detail below). A portion of the outer periphery of the first movable sleeve 10 other than the radially-outer side contact portions 12 is smaller in diameter than each of the radially-outer side contact portions 12, and is held so as not to be in contact with the inner periphery of the guide cylinder 40.

Note that the retainer 9 has a cylindrical shape, and extends from a transmission case (not shown) of the dry DCT. A cylindrical first power transmission shaft 3 is arranged in the cylindrical retainer 9. A second power transmission shaft 4 is passed through the center portion of the first power transmission shaft 3. The first power transmission shaft 3 is connected to an output shaft side of an engine via a first clutch mechanism (not shown) such that torque is transmittable through the first power transmission shaft 3. The second power transmission shaft 4 is connected to the output shaft side of the engine via a second clutch mechanism (not shown) such that torque is transmittable through the second power transmission shaft 4.

The first clutch release bearing 30 includes an outer ring 31, an inner ring 35 and rolling elements (balls in FIG. 1) 32. The rolling elements 32 are rollably arranged between these outer ring 31 and inner ring 35, and are retained by a cage 33. The first clutch release bearing 30 is fitted to one end portion (end portion closer to the first diaphragm spring 7) of the first movable sleeve 10 via a first cover member 20. In the first embodiment, the first cover member 20 has a fixing cylindrical portion 21, an annular portion 22 and a radially-outer side cylindrical portion 23. The fixing cylindrical portion 21 is press-fitted to the large-diameter-side inner periphery, which defines the space 13 at one end side of the first movable sleeve 10. The annular portion 22 is formed in an annular shape and extends radially outward from the outer periphery of one end portion of the fixing cylindrical portion 21 along one end face of the first movable sleeve 10. The radially-outer side cylindrical portion 23 has a cylindrical shape, and extends from the radially-outer end of the annular portion 22. In addition, the outside diameter of the radially-outer side cylindrical portion 23 is slightly smaller than the outside diameter of the first movable sleeve 10. The outer ring 31 of the first clutch release bearing 30 is press-fitted to the inner periphery of the radially-outer side cylindrical portion 23. In addition, a pushing portion 36 is formed at one end of the inner ring 35 of the first clutch release bearing 30. The pushing portion 36 pushes a radially-inner side portion of the first diaphragm spring 7.

The guide cylinder 40 is formed by forming a metal sheet into a cylindrical shape, and is fixedly arranged on the outer periphery of the first movable sleeve 10 over the entire axial length of the first movable sleeve 10 so as to be movable together with the first movable sleeve 10. An extended cylindrical portion 42 is formed at one end portion of the guide cylinder 40, which faces the first diaphragm spring 7. The extended cylindrical portion 42 accommodates the first clutch release bearing 30 together with the first cover member 20. In addition, a first link portion 41 is formed at the other end portion of the guide cylinder 40, which faces the first release fork 5. The first link portion 41 is coupled to the first release fork 5. The first link portion 41 has an annular portion 41a and a coupling portion 41b. The annular portion 41a is formed in an annular shape, and extends radially inward from the end portion of the guide cylinder 40, which faces the first release fork 5, so as to be in contact with the end face of the first movable sleeve 10. The first link portion 41 is bent such that the coupling portion 41b extends from the radially-inner end of the annular portion 41a so as to be coupled to the first release fork 5. The movement of the first release fork 5 is transmitted to the first movable sleeve 10 via the first link portion 41.

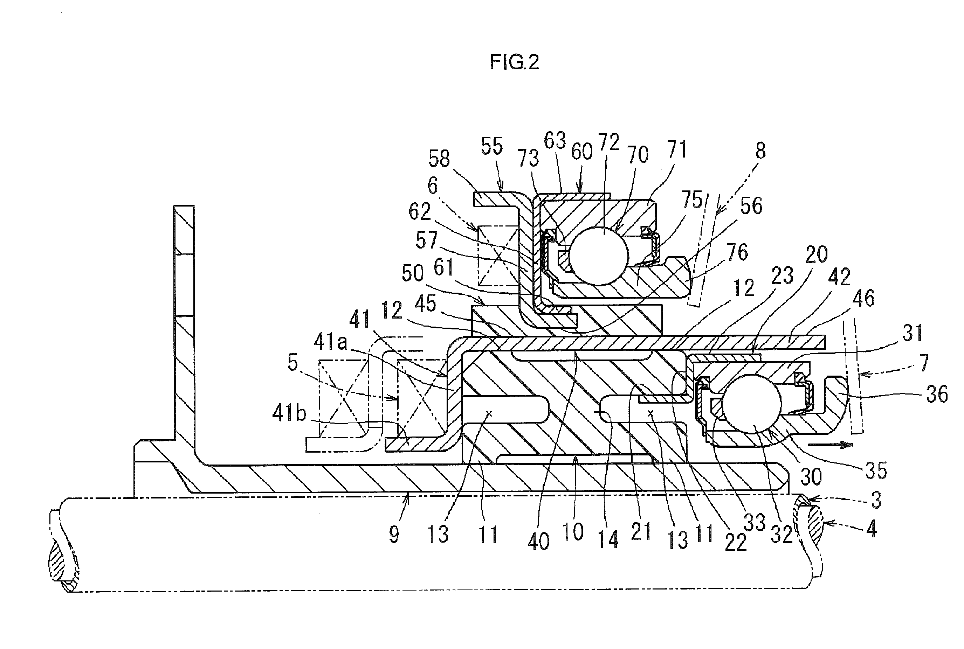

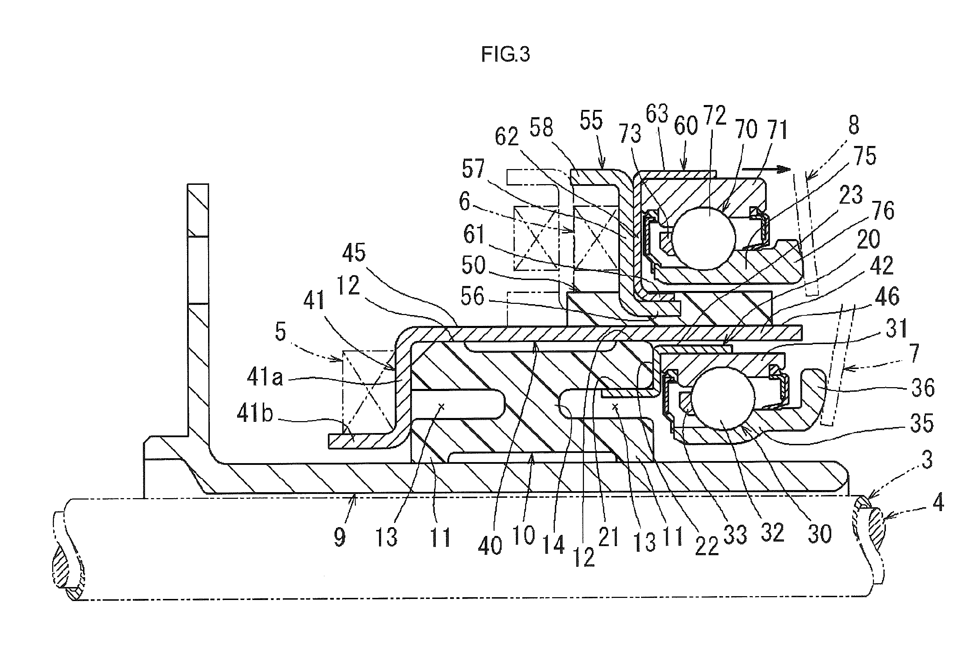

The second movable sleeve 50 is fitted to the outer periphery of the guide cylinder 40. A first sliding portion 45 and a second sliding portion 46 are formed on the outer periphery of the guide cylinder 40 including the extended cylindrical portion 42. As shown in FIG. 2, when the first movable sleeve 10 is slid to an actuating position in the axial direction with the second movable sleeve 50 arranged at a standby position, the first sliding portion 45 slidingly guides the second movable sleeve 50 relative to the first movable sleeve 10 in the axial direction. As shown in FIG. 3, when the second movable sleeve 50 is slid to an actuating position in the axial direction with the first movable sleeve 10 arranged at a standby position, the second sliding portion 46 slidingly guides the second movable sleeve 50 in the axial direction. That is, an axial length (cylinder length) L1 of the guide cylinder 40 including the extended cylindrical portion 42 is equal to or slightly longer than the sum of an axial length L2 of the second movable sleeve 50, an axial length L3 of the first sliding portion 45 and an axial length L4 of the second sliding portion 46.

The second movable sleeve 50 is formed into a cylindrical shape having a bore diameter equal to or slightly larger than the outside diameter of the guide cylinder 40 by subjecting a synthetic resin material to injection molding. The second movable sleeve 50 is fitted to the outer periphery of the guide cylinder 40 so as to be slidable in the axial direction. A second link portion 55 and a second cover member 60 are fixed to the outer periphery of the second movable sleeve 50, at a position near the axial center of the second movable sleeve 50. The second link portion 55 is coupled to the second release fork 6. The second clutch release bearing 70 is fitted to the second cover member 60.

The second link portion 55 has a fixing cylindrical portion 56, an annular portion 57 and a coupling portion 58. The fixing cylindrical portion 56 is fixedly embedded in an outer peripheral portion of the second movable sleeve 50. The annular portion 57 is formed in an annular shape, and extends radially outward from one end of the fixing cylindrical portion 56. The second link 55 is bent such that the coupling portion 58 extends from the radially-outer end of the annular portion 57 so as to be coupled to the second release fork 6. The movement of the second release fork 6 is transmitted to the second movable sleeve 50 via the second link portion 55.

The second cover member 60 has a fixing cylindrical portion 61, an annular portion 62 and a radially-outer side cylindrical portion 63. The fixing cylindrical portion 61 is fixedly embedded in the outer peripheral portion of the second movable sleeve 50 while being fitted to the outer periphery of the fixing cylindrical portion 56 of the second link portion 55. The annular portion 62 is formed in an annular shape, and extends radially outward from the outer periphery of one end portion of the fixing cylindrical portion 61 along the annular portion 57 of the second link portion 55. The radially-outer side cylindrical portion 63 is formed in a cylindrical shape, and extends from the radially-outer end of the annular portion 62.

The second clutch release bearing 70 includes an outer ring 71, an inner ring 75 and rolling elements (balls in FIG. 1) 72. The rolling elements 72 are rollably arranged between the outer ring 71 and the inner ring 75, and are retained by a cage 73. The outer ring 71 of the second clutch release bearing 70 is press-fitted to the inner periphery of the radially-outer side cylindrical portion 63 of the second cover member 60. A pushing portion 76 is formed at one end of the inner ring 75 of the second clutch release bearing 70. The pushing portion 76 pushes a radially-inner side portion of the second diaphragm spring 8.

The clutch release bearing device employed in a dry DCT according to the first embodiment is configured as described above. Therefore, as shown in FIG. 2, when the first movable sleeve 10 together with the first link portion 41 is slid by the first release fork 5 on the outer periphery of the retainer 9 in the axial direction and is placed at an actuating position with the second movable sleeve 50 arranged at a standby position, the radially-inner side portion of the first diaphragm spring 7 is pushed by the pushing portion 36 of the inner ring 35 of the first clutch release bearing 30. Thus, the first clutch mechanism (not shown) is placed in a connected state, and torque is transmitted from the output shaft side of the engine to the first power transmission shaft 3. Then, in this state, for example, in the case of seven-speed automatic control manual transmission, gear change to one of odd-numbered gears (first gear, third gear, fifth gear and seventh gear) is made in the transmission.. In addition, when the first movable sleeve 10 is slid over the outer periphery of the retainer 9 in the axial direction, the second movable sleeve 50 slides over the first sliding portion 45 of the first movable sleeve 10 relative to the first movable sleeve 10.

In addition, as shown in FIG. 3, when the second movable sleeve 50 together with the second link portion 55 is slid by the second release fork 6 along the second sliding portion 46 of the first movable sleeve 10 in the axial direction and is placed at an actuating position with the first movable sleeve 10 arranged at a standby position, the radially-inner side portion of the second diaphragm spring 8 is pushed by the pushing portion 76 of the inner ring 75 of the second clutch release bearing 70. Thus, the second clutch mechanism (not shown) is placed in a connected state, and torque is transmitted from the output shaft side of the engine to the second power transmission shaft 4. Then, in this state, gear change to one of even-numbered gears (second gear, fourth gear and sixth gear) is made in the transmission.

In the clutch release bearing device according to the first embodiment, the first clutch release bearing 30 is accommodated in the extended cylindrical portion 42 of the guide cylinder 40 that is fixedly arranged on the outer periphery of the first movable sleeve 10 so as to be movable together with the first movable sleeve 10, and the first sliding portion 45 and the second sliding portion 46 are formed on the outer periphery of the guide cylinder 40 including the extended cylindrical portion 42. Thus, the axial length L of the clutch release bearing device is reduced by an amount corresponding to the axial length of the first clutch release bearing 30 that is accommodated in the extended cylindrical portion 42 of the guide cylinder 40 (see FIG. 1), in comparison with a conventional art, as shown in FIG. 5, in which a first clutch release bearing 240 is arranged in front of a flange 210a formed at one end side of a first movable sleeve 210 and a first sliding portion 245 and a second sliding portion 246 are formed behind the flange 210a.

In addition, in the first embodiment, the annular radially-inner side contact portions 11 formed in the inner periphery of the first movable sleeve 10 at the positions near the respective axial end portions slidably contact the outer periphery of the retainer 9. Further, the portion of the inner periphery of the first movable sleeve 10, other than radially-inner side contact portions 11, is formed so as to be larger in diameter than each radially-inner side contact portion 11. Thus, this portion is held so as not to be in contact with the outer periphery of the retainer 9. Therefore, when the first movable sleeve 10 slides over the outer periphery of the retainer 9 in the axial direction, it is possible to suppress tilting of the first movable sleeve 10 with respect to the axial direction of the retainer 9. As a result, the first movable sleeve 10 is smoothly slid over the outer periphery of the retainer 9 in the axial direction. In addition, the annular radially-outer side contact portions 12 formed in the outer periphery of the first movable sleeve 10 at the positions near the respective axial end portions are press-fitted to and in contact with the inner periphery of the guide cylinder 40. Further, the portion of the outer periphery of the first movable sleeve 10, other than the radially-outer side contact portions 12, is formed so as to be smaller in diameter than each radially-outer side contact portion 12. Thus, this portion is held so as not to be in contact with the inner periphery of the guide cylinder 40. Therefore, when the guide cylinder 40 is fixedly press-fitted to the outer periphery of the first movable sleeve 10, it is possible to suppress tilting of the guide cylinder 40 with respect to the axial direction of the first movable sleeve 10. As a result, the second movable sleeve 50 is smoothly slid over the outer periphery of the guide cylinder 40 in the axial direction. In addition, in the first embodiment, because the guide cylinder 40 is made of metal, it is possible to reduce the sliding resistance of the second movable sleeve 50 in comparison with the case where the guide cylinder 40 is made of synthetic resin.

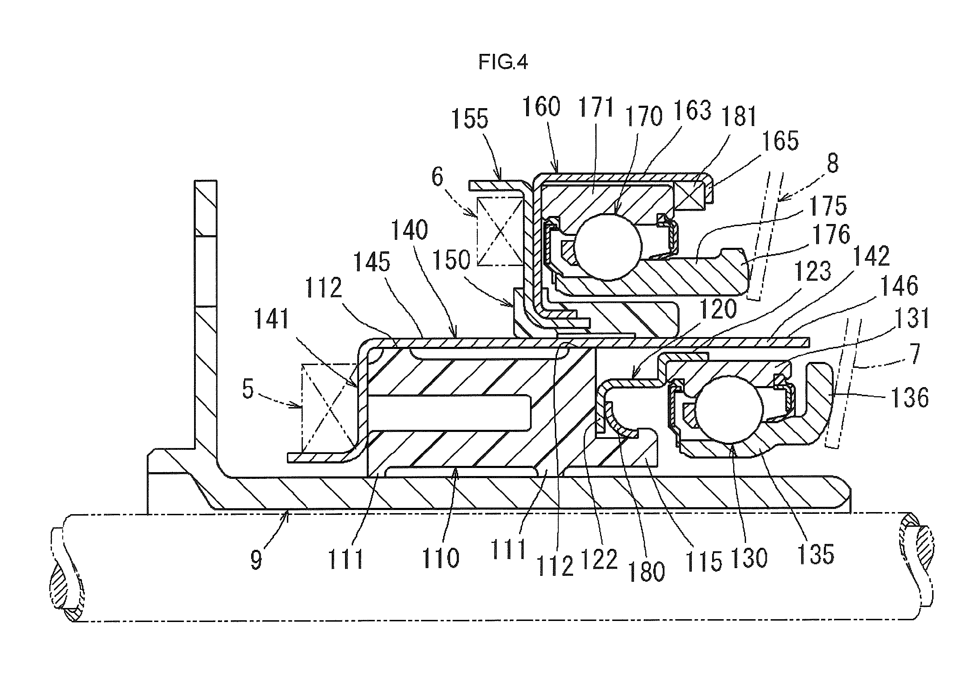

Next, a clutch release bearing device according to a second embodiment of the invention will be described with reference to FIG. 4. As shown in FIG. 4, in the second embodiment, a first clutch release bearing 130 is fitted to a first movable sleeve 110 so as to be movable in the radial direction to provide an aligning function, and a second clutch release bearing 170 is fitted to a second movable sleeve 150 so as to be movable in the radial direction to provided an aligning function. That is, an annular portion 122 of a first cover member 120 is fitted to a support portion 115 formed at one end portion of the first movable sleeve 110 via a first aligning spring 180 so as to be movable in the radial direction. The first aligning spring 180 is formed of a coned disc spring. In addition, an outer ring 131 of the first clutch release bearing 130 is press-fitted to a radially-outer side cylindrical portion 123 of the first cover member 120.

In addition, an outer ring 171 of the second clutch release bearing 170 is fitted to a radially-outer side cylindrical portion 163 of a second cover member 160 that is fixed to the outer periphery of the second movable sleeve 150 so as to be movable in the radial direction. Further, a spring receiving portion 165 that is formed in an annular shape and that extends radially inward is formed at the distal end of the radially-outer side cylindrical portion 163. A second aligning spring 181 formed of a wave spring washer is interposed between the end face of the outer ring 171 and the spring receiving portion 165.

The other configurations of the second embodiment are the same as those in the first embodiment. That is, annular radially-inner side contact portions 111 are formed in the inner periphery of the first movable sleeve 110 at the positions near the respective axial end portions. The radially-inner side contact portions 111 slidably contact the outer periphery of the retainer 9. A portion of the inner periphery of the first movable sleeve 110, other than the radially-inner side contact portions 111, is larger in diameter than each radially-inner side contact portion 111, and is held so as not to be in contact with the outer periphery of the retainer 9. In addition, annular radially-outer side contact portions 112 are formed in the outer periphery of the first movable sleeve 110 at the positions near the respective axial end portions. The radially-outer side contact portions 112 are press-fitted to the inner periphery of the guide cylinder 140. A portion of the outer periphery of the first movable sleeve 110, other than the radially-outer side contact portions 112, is smaller in diameter than each radially-outer side contact portion 112, and is held so as not to be in contact with the inner periphery of the guide cylinder 140.

In addition, an extended cylindrical portion 142 is formed at one end portion of the guide cylinder 140, which faces the first diaphragm spring 7. The extended cylindrical portion 142 accommodates the first clutch release bearing 130 together with the first cover member 120. In addition, a first link portion 141 is formed at the other end portion of the guide cylinder 140, which faces the first release fork 5. The first link portion 141 is coupled to the first release fork 5. A first sliding portion 145 and a second sliding portion 146 are formed on the outer periphery of the guide cylinder 140 including the extended cylindrical portion 142. A second link portion 155 together with a second cover member 160 is fixed to the outer peripheral portion of the second movable sleeve 150. The second link portion 155 is coupled to the second release fork 6.

The thus configured clutch release bearing device according to the second embodiment has similar operations and advantageous effects to those of the first embodiment. Particularly, in the second embodiment, the first clutch release bearing 130 together with the first cover member 120 is supported by the first aligning spring 180 so as to be movable in the radial direction with respect to the first movable sleeve 110. Thus, it is possible to provide an aligning function. Furthermore, the second clutch release bearing 170 together with the second cover member 160 is supported by the second aligning spring 181 so as to be movable in the radial direction with respect to the second movable sleeve 150. Thus, it is possible to provide an aligning function.

Note that the invention is not limited to the above-described embodiments, and the invention may be implemented in various other embodiments without departing from the scope of the invention. For example, in the first and second embodiments, the pushing portions 36, 76 (136, 176) that push the first and second diaphragm springs 7, 8 are formed at the end portions of the inner rings 35, 75 (135, 175) of the first and second clutch release bearings 30, 70 (130, 170), respectively. Alternatively, pushing portions that that push the first and second diaphragm springs 7, 8 may be formed at the end portions of the outer rings 31, 71 (131, 171) of the first and second clutch release bearings 30, 70 (130, 170), respectively. In this case, the inner rings 35, 75 (135, 175) of the first and second clutch release bearings 30, 70 (130, 170) are fitted to the first and second cover members 20, 60 (120, 160), respectively.

## Claims

1. A clutch release bearing device, comprising:
a first movable sleeve (10) that is slidably fitted to an outer periphery of a retainer (9), and that is slid by a first release fork (5) in an axial direction;
a first clutch release bearing (30) that is fitted to the first movable sleeve (10), and that actuates a first diaphragm spring (7);
a guide cylinder (40) that is fixedly arranged on an outer periphery of the first movable sleeve (10) so as to be movable together with the first movable sleeve (10);
a second movable sleeve (50) that is slidably fitted to an outer periphery of the guide cylinder (40), and that is slid by a second release fork (6) in the axial direction; and
a second clutch release bearing (70) that is fitted to the second movable sleeve (50), and that actuates a second diaphragm spring (8), wherein
an extended cylindrical portion (42) that accommodates the first clutch release bearing (30) is formed at an end portion of the guide cylinder (40), which faces the first diaphragm spring (7),
a first sliding portion (45) and a second sliding portion (46) are formed on the outer periphery of the guide cylinder (40) including the extended cylindrical portion (42),
when the first movable sleeve (10) is slid in the axial direction to an actuating position with the second movable sleeve (50) arranged at a standby position, the first sliding portion (45) slidingly guides the second movable sleeve (50) in the axial direction relative to the first movable sleeve (10), and
when the second movable sleeve (50) is slid in the axial direction to an actuating position with the first movable sleeve (10) arranged at a standby position, the second sliding portion (46) slidingly guides the second movable sleeve (50) in the axial direction.

2. The clutch release bearing device according to claim 1, wherein:
annular radially-inner side contact portions (11) that slidably contact the outer periphery of the retainer (9) are formed in an inner periphery of the first movable sleeve (10) at positions near respective axial end portions of the inner periphery of the first movable sleeve (10);
a portion of the inner periphery of the first movable sleeve (10), other than the radially-inner side contact portions (11), is formed to be larger in diameter than each of the radially-inner side contact portions (11) to be held so as not to be in contact with the outer periphery of the retainer (9);
annular radially-outer side contact portions (12) that are press-fitted to and in contact with an inner periphery of the guide cylinder (40) are formed in the outer periphery of the first movable sleeve (10) at positions near respective axial end portions of the outer periphery of the first movable sleeve (10); and
a portion of the outer periphery of the first movable sleeve (10), other than the radially-outer side contact portions (12), is formed to be smaller in diameter than each of the radially-outer side contact portions (12) to be held so as not to be in contact with the inner periphery of the guide cylinder (40).
